(19) Europäisches Patentamt
European Patent Office
Office européen des brevets

(11) **EP 3 053 320 B1**

(12) **FASCICULE DE BREVET EUROPEEN**

(45) Date de publication et mention de la délivrance du brevet:
**12.09.2018 Bulletin 2018/37**

(21) Numéro de dépôt: **14796194.0**

(22) Date de dépôt: **25.09.2014**

(51) Int Cl.:
***H04L 29/06*** *(2006.01)*

(86) Numéro de dépôt international:
**PCT/FR2014/052403**

(87) Numéro de publication internationale:
**WO 2015/044595 (02.04.2015 Gazette 2015/13)**

(54) **PROCÉDÉ DE DÉTECTION D'ANOMALIES DANS UN TRAFIC RÉSEAU**

VERFAHREN ZUR ERKENNUNG VON ANOMALIEN IN EINEM NETZWERKVERKEHR

METHOD FOR DETECTING ANOMALIES IN NETWORK TRAFFIC

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.09.2013 FR 1359461**

(43) Date de publication de la demande:
**10.08.2016 Bulletin 2016/32**

(73) Titulaire: **Orange**
**75015 Paris (FR)**

(72) Inventeurs:
• **MITTIG, Karel**
**F-14000 Caen (FR)**
• **BIGNON, Fabien**
**F-14000 Caen (FR)**

(56) Documents cités:
**US-A1- 2004 064 738     US-A1- 2006 179 040**

**Description**

L'invention se rapporte au domaine général des télécommunications. Elle concerne plus particulièrement la sécurité informatique et porte sur un procédé de détection d'anomalies dans un trafic réseau.

L'invention trouve une application particulièrement intéressante dans le cadre de la détection et de la prévention d'intrusions dans des réseaux et des plates-formes de service. Une intrusion dans un réseau ou une plate-forme de services constitue un risque important pour des entreprises puisqu'elle peut être à l'origine de fuites de données confidentielles, telles que des données clients, des informations concurrentielles. De telles attaques peuvent avoir des conséquences financières importantes pour l'entreprise et en tout état de cause nuire à l'image de marque de l'entreprise.

De nombreuses méthodes ont été développées dans le but de détecter de telles intrusions. Certaines sont mises en oeuvre en phase de conception d'un système, d'autres une fois le système développé, au moyen d'équipements de détection d'attaques. Cependant les méthodes mises en oeuvre en phase de conception sont extrêmement complexes et coûteuses à mettre en oeuvre, notamment lorsque de nombreux acteurs sont impliqués. Quant aux méthodes de détection une fois le système conçu, elles ne sont pas infaillibles et sont connues pour être très sensibles aux faux positifs. On connaît également une autre approche consistant à analyser des réponses à des requêtes faites auprès d'un serveur afin de détecter la présence d'informations sensibles dans les réponses. Cette méthode est plus connue sous le nom de méthode de détection de fuite de données, ou « DLP » (de l'anglais «Data Leakage Protection »). Par exemple une telle méthode va détecter des signatures correspondant à des numéros de cartes de crédit et bloquer des réponses à des requêtes lorsque les réponses contiennent ce type d'information.

Cependant, une telle méthode est confrontée à des problèmes de performances. En effet, le volume des réponses est en moyenne vingt fois supérieur au volume des requêtes. Ainsi, une analyse des réponses aux requêtes est coûteuse en termes de temps de traitement d'une part, et en termes de charge mémoire d'autre part. Il existe donc peu de mises en oeuvre de techniques de détection d'intrusions basées sur cette approche.

Le document US2006/179040, 10 août 2006 (2006-08-10) décrit un système d'analyse de réponses provenant d'une base de données. Ce système vise à définir des politiques sur les informations pouvant être retournées en réponse à des requêtes à destination de ces bases de données.

Un des buts de l'invention est de remédier à des insuffisances/inconvénients de l'état de la technique et/ou d'y apporter des améliorations.

A cette fin, l'invention propose un procédé de détection d'anomalies dans un trafic réseau, ledit trafic étant transmis par un serveur en réponse à des requêtes d'au moins un dispositif client, le procédé comprenant :

- une étape de réception d'une requête, ladite requête étant d'un type donné,
- une étape de réception d'une réponse à la requête,
- une étape de construction d'un vecteur de bits courant, représentatif de la réponse,
- une étape de calcul d'un indice de similarité représentatif d'une distance entre le vecteur de bits courant et un vecteur de bits modèle associé au type de la requête,
- une étape de vérification que l'indice de similarité appartient à un intervalle de conformité calculé pour le type de requête, une anomalie étant détectée lorsque l'indice de similarité n'appartient pas à l'intervalle de conformité.

La méthode décrite, basée sur une modélisation et une analyse en temps réel des réponses d'un serveur applicatif permet de détecter des réponses anormales, caractéristiques d'une anomalie liée à une attaque ou à un comportement anormal d'une application. La méthode permet d'optimiser la taille mémoire nécessaire à cette analyse temps-réel ainsi que la puissance de calcul. En effet, la méthode est basée sur une représentation binaire de réponses à des requêtes et ne nécessite pas de mémoriser les réponses une fois leur représentation construite. Le gain en espace mémoire est considérable. Par ailleurs, le calcul de données utilisées par le procédé, ainsi que les comparaisons nécessaires pour détecter un comportement anormal sont basés sur ces représentations binaires. La puissance de calcul nécessaire est donc moindre que lorsque les réponses sont manipulées dans leur forme initiale.

Par ailleurs, le procédé permet de détecter une fuite d'information de façon plus générique que des méthodes connues basées sur l'approche DLP. En effet, les méthodes connues sont adaptées pour détecter dans des réponses à des requêtes des informations précises, telles que des numéros de cartes particuliers, et pour bloquer des réponses qui comprennent ces informations. Au contraire, la méthode proposée ici permet de détecter des informations génériques, telles que des types d'informations comme par exemple des numéros de compte ou des mots de passe. En effet, la méthode permettant de détecter une réponse anormale par rapport à un fonctionnement normal de l'application, toute forme de réponse anormale est détectée. Par exemple, si des requêtes permettent d'obtenir une adresse e-mail propre à un utilisateur nommé dans la requête, une réponse comprenant plus d'une adresse e-mail, consécutive à une requête malicieuse, sera détectée comme anormale. Le procédé permet également de détecter une anomalie différente d'une fuite de donnée. Une telle anomalie est détectée lorsque l'indice de similarité est supérieur à la borne supérieure de l'intervalle de conformité. Dans ce cas, la réponse s'approche du vecteur de bits modèle calculé de manière théorique, ce qui est incompatibles avec un comportement dynamique du service.

Par ailleurs, la présente méthode n'interfère pas avec des services destinés à fournir des informations sensibles en réponse à des requêtes puisqu'elle repose sur la détection d'un comportement s'écartant d'une modélisation du fonctionnement normal du service. La méthode ne tient donc pas compte de la sensibilité des données qui doivent être envoyées en réponse à des requêtes, mais de la forme des réponses normalement envoyées.

Selon un exemple de réalisation, le procédé comprend une phase d'apprentissage qui comprend :

- une étape de réception d'une requête initiale, la requête initiale étant du type donné,
- une étape de réception d'une réponse initiale à la requête initiale,
- une étape de construction d'un vecteur de bits modèle, représentatif de la réponse initiale,
- une étape de mise à jour du vecteur modèle à partir d'un vecteur de bits suivant, construit à partir d'une réponse suivante reçue consécutivement à une requête suivante du type donné,
- une étape de calcul d'un indice de similarité entre le vecteur modèle mis à jour et le vecteur de bits suivant, les étapes de mise à jour et de calcul de l'indice de similarité étant réitérées au moins une fois,
- une étape de calcul d'une moyenne des indices de similarité calculés et d'un écart-type de ces indices,
- une étape de calcul de l'intervalle de conformité à partir de la moyenne des indices et de l'écart-type.

La méthode comprend une phase d'apprentissage nécessaire au calcul des indicateurs utilisés en phase de détection, en l'espèce le vecteur de bits modèle, les indices de similarité, leur moyenne et l'écart-type entre ces indices et le seuil de variabilité qui représente une variabilité tolérée pour des réponses à des requêtes d'un type donné.

De façon avantageuse, l'intervalle de conformité est défini au moyen de la moyenne $M_{IS}$ des indices de similarité calculés et de l'écart-type ($\sigma_{IS}$ de ces indices, selon la formule suivante :

$$IC = [M_{IS} - 3 * \sigma, M_{IS} + 3 * \sigma]$$

La formule de calcul de l'intervalle de conformité permet de limiter largement le nombre de faux-positifs, c'est-à-dire des réponses à des requêtes qui seraient identifiées comme anormales alors qu'en réalité ces réponses sont normales. En effet, l'écart-type et la moyenne permettent de déterminer un intervalle dans lequel se trouve la majorité d'une population d'un échantillon de valeurs. En l'occurrence, il est connu que la répartition des valeurs d'un échantillon est conforme à une représentation graphique d'une loi normale et que dans un intervalle $[-3 * \sigma_{IS}, +3 * \sigma_{IS}]$ autour de la moyenne, se trouve 98% de la distribution de l'échantillon. La majorité des réponses normales fait donc partie de cet intervalle de conformité ; elle n'est donc pas détectée comme anormale par la méthode.

Dans un exemple de réalisation, la construction d'un vecteur de bits à partir d'une réponse à une requête comprend les étapes suivantes :

- décomposition de la réponse en mots qui la composent,
- calcul d'une position Pj, $1 \leq j \leq n$, dans le vecteur de bits, ladite position étant associée à un des mots par mise en oeuvre des étapes suivantes :

  - conversion dudit mot en une forme binaire,
  - obtention de la position Pj dans le vecteur par application modulo n d'une fonction de hachage à ladite forme binaire obtenue, et
  - positionnement du Pj-ième bit à 1.

La méthode précise comment représenter les réponses à des requêtes d'un type donné par un vecteur de bits où chaque mot de la réponse est représenté par un bit d'une position donnée dans le vecteur. Une telle représentation contribue au gain de l'espace mémoire utilisé pour la mise en oeuvre de la méthode.

De façon avantageuse, le procédé comprend également une étape de filtrage durant laquelle un vecteur de bits de filtrage comprenant une représentation d'un ensemble de mots non significatifs est soustrait au vecteur modèle et au vecteur de bits suivant avant la mise à jour du vecteur modèle à partir du vecteur de bits suivant.

Un vecteur représentatif d'un vocabulaire non significatif est construit et soustrait aux vecteurs de bits manipulés. Ainsi, les vecteurs de bits manipulés, que ce soit le vecteur modèle ou les vecteurs suivants, sont représentatifs uniquement de données, c'est-à-dire de mots, sémantiquement significatifs dans le cadre de la sécurité applicative. On comprend que dans ce cas, tous les indicateurs calculés à partir des vecteurs de bits sont définis plus finement que lorsqu'un vocabulaire non significatif est représenté. La méthode permet une détection plus fine des réponses anormales. Par ailleurs, en faisant abstraction du vocabulaire non significatifs, il y a un gain supplémentaire de l'espace mémoire.

Dans un exemple de réalisation, la taille du vecteur de bits est un nombre d'octets compris entre 4Kbits et 400Kbits.

La taille des vecteurs de bits est comprise entre une valeur minimale de 4Kbits, qui permet de représenter deux mille huit cents mots, et une valeur maximale de 400Kbits qui correspond à une valeur raisonnable par rapport à la capacité mémoire d'un système. A noter qu'une conversation normale utilise à peu près deux mille mots. Ainsi, la plage de valeurs proposée permet de configurer au mieux la méthode pour tenir compte des capacités du système et des besoins inhérents au service considéré.

Dans un exemple de réalisation, un ordre de grandeur de la taille du vecteur de bits est de 5% d'une taille moyenne de réponses à des requêtes.

La taille des vecteurs de bits utilisés pour représenter les réponses aux requêtes d'un type donné, que ce soit en phase d'apprentissage ou en phase de détection, est fixée de telle façon que la probabilité d'avoir une collision dans un vecteur de bits est extrêmement faible. Il y a collision lorsque deux mots différents d'une réponse à une requête sont représentés par le même bit dans un vecteur de bits. Ainsi, la représentation binaire est fiable et contribue de ce fait à la fiabilité de la méthode.

Dans un exemple de réalisation, les étapes de la phase d'apprentissage sont mises en oeuvre selon une fréquence donnée sur une période déterminée.

Un échantillonnage temporel pour mettre en oeuvre la phase d'apprentissage est intéressant dans le cas de service dont on connaît l'évolution dans le temps. Par exemple, dans le cas d'un service web dont la page d'accueil varie temporellement, selon une fréquence connue, il est intéressant d'échantillonner, c'est-à-dire de modéliser des réponses à des requêtes d'un type donné, selon la même fréquence d'évolution du service. L'échantillonnage est donc effectué en fonction de l'évolution du service. Cela permet de mettre en oeuvre une phase d'apprentissage performante et contribue à la fiabilité de la méthode.

Dans un exemple de réalisation, le nombre d'itérations des étapes de la phase d'apprentissage est déterminé dynamiquement en comparant des écarts-types obtenus entre une m-ième itération et des (m-1)-ième et (m-2)-ième itérations, avec m > 4, le nombre d'itérations étant suffisant lorsqu'une variation des écarts-types obtenus est inférieure à une valeur donnée.

Ainsi, le nombre d'itérations est défini dynamiquement et permet d'obtenir un vecteur modèle et un intervalle de conformité fiable et précis avec un nombre optimum d'itérations.

De façon avantageuse le procédé comprend comprend une étape de comparaison du vecteur de bits modèle et du vecteur de bits courant, mise en oeuvre lorsque l'écart-type calculé en phase d'apprentissage est égal à zéro, une alerte étant levée lorsque les vecteurs sont différents.

Ainsi, le procédé de détection permet de détecter une attaque de type défiguration (ou « defacement » en anglais) de site. En effet, lorsque le service proposé par le serveur est un service web d'accès à un site au contenu statique, la moindre différence entre le vecteur de bits courant construit consécutivement à une requête au serveur et le vecteur de bits modèle construit en phase d'apprentissage génère une alerte. En effet, dans le cas d'un accès à un site dont le contenu est reconnu comme étant statique, l'écart-type calculé en phase d'apprentissage est nul puisque tous les vecteurs de bits suivants calculés à partir des réponses suivantes sont identiques au vecteur de bits modèle. Ainsi, il a été identifié en phase d'apprentissage que pour un type de requête donné, les réponses étaient toutes identiques. Une variation d'une réponse à une requête du type donné en phase de détection est donc révélatrice d'une modification du site et donc d'une attaque.

L'invention concerne également un dispositif de détection d'anomalies dans un trafic réseau, ledit trafic étant transmis par un serveur en réponse à des requêtes d'un dispositif client, le dispositif comprenant :

- des moyens de réception, adaptés pour recevoir une requête, ladite requête étant d'un type donné, et pour recevoir une réponse à la requête,
- des moyens de construction, adaptés pour construire un vecteur de bits courant, représentatif de la réponse,
- des moyens de calcul, adaptés pour calculer un indice de similarité représentatif d'une distance entre le vecteur de bits courant et un vecteur de bits modèle associé au type de la requête,
- des moyens de vérification, adaptés pour vérifier que l'indice de similarité n'appartient pas à un intervalle de conformité calculé pour le type de requête, une anomalie étant détectée lorsque l'indice de similarité n'appartient pas à l'intervalle de conformité.

L'invention concerne aussi un programme d'ordinateur destiné à être installé dans une mémoire d'un ordinateur, comprenant des instructions pour la mise en oeuvre des étapes du procédé de détection d'anomalies dans un trafic réseau selon l'invention, lorsque le programme est exécuté par un processeur.

Enfin, l'invention concerne également un support de données sur lequel est enregistré le programme selon l'invention.

D'autres caractéristiques et avantages de la présente invention seront mieux compris de la description et des dessins annexés parmi lesquels :

- la figure 1 présente les étapes d'une phase d'apprentissage d'un procédé de détection d'anomalies dans un trafic réseau, selon un premier exemple de réalisation ;
- la figure 2 présente les étapes d'une phase de détection du procédé de détection d'anomalies, selon un exemple de réalisation ;
- la figure 3 est une représentation schématique d'un équipement réseau de détection mettant en oeuvre le procédé décrit en relation avec les figures 1 et 2, selon un exemple de réalisation de l'invention.

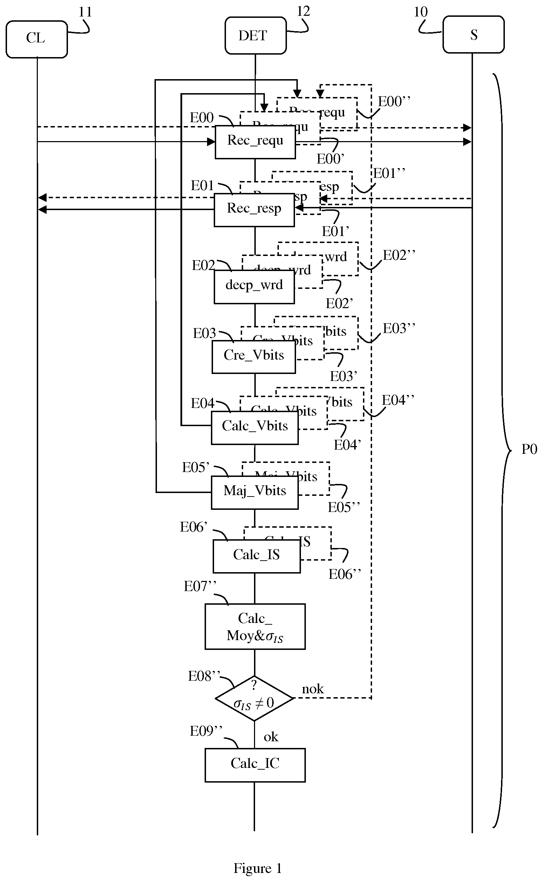

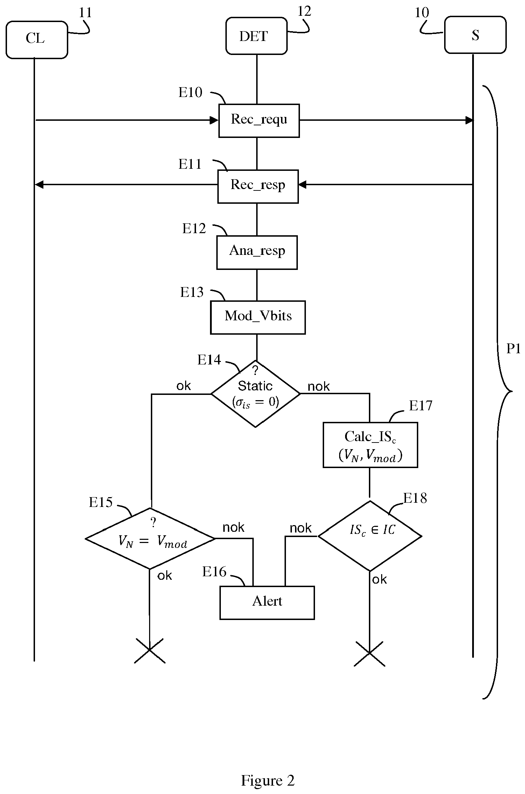

Les étapes d'un procédé de détection d'anomalie dans un trafic réseau, selon un exemple de réalisation de l'invention vont maintenant être décrites en relation avec les figures 1 et 2.

Un serveur 10 apte à rendre un service mémorise dans une mémoire non représentée des données sensibles. Le service est par exemple un service web. Les données sensibles sont par exemple des données propres à des utilisateurs, telles que des adresses e-mail, des numéros de comptes, des mots de passe, etc. Le serveur 10 peut être interrogé à distance par un dispositif client 11, à travers un réseau, par exemple le réseau Internet, dans le but de rendre un service donné. Par exemple le service permet au dispositif client 11 d'interroger le serveur 10 en fournissant les nom et prénom d'un utilisateur, et d'obtenir en réponse l'adresse e-mail de l'utilisateur. Un équipement de détection 12, placé en coupure entre le dispositif client 11 et le serveur 10 mémorise une application (non représentée sur la figure 1) qui comprend des instructions de code pour mettre en oeuvre les étapes du procédé de détection d'anomalies décrit ici.

Le procédé de détection d'anomalies dans un trafic réseau comprend deux phases :

- une phase d'apprentissage P0, destinée à construire un vecteur de bits modèle représentatif des réponses reçues du serveur 10 en réponse à un type de requête donné. Les étapes de la phase d'apprentissage, selon un exemple de réalisation, sont décrites en relation avec la figure 1 ;
- une phase de détection P1, au cours de laquelle une réponse à une requête du type donné est comparée au vecteur de bits modèle construit et mis à jour durant la phase d'apprentissage et une anomalie est détectée lorsque la réponse à la requête s'écarte d'un intervalle de conformité construit pour ce modèle. Les étapes de la phase de détection, selon un exemple de réalisation de l'invention sont décrites en relations avec la figure 2.

Dans l'exemple de réalisation décrit ici, la phase d'apprentissage P0 est mise en oeuvre dans un environnement sécurisé, c'est-à-dire dans un environnement où l'on suppose que les requêtes qui sont envoyées au serveur 10 par le dispositif client 11 et les réponses reçues durant cette phase sont correctes. Au contraire, la phase de détection P1 est mise en oeuvre dans un environnement opérationnel. Dans cet environnement, des requêtes sont susceptibles d'être envoyées depuis des dispositifs client 11 pirates tentant de perpétrer des attaques contre le serveur 10. Cependant, pour des raisons de simplification, le même dispositif client 11 figure sur les figures 1 et 2.

La phase d'apprentissage P0 comprend une pluralité d'étapes, itérées un nombre déterminé de fois afin d'établir, à partir d'un échantillon de plusieurs réponses reçues suite à plusieurs requêtes d'un type donné, un modèle de réponse propre à ce type de requête. Ces itérations sont destinées à affiner des indicateurs qui vont être utilisés pour détecter des anomalies lors de la phase ultérieure de détection P1.

Ainsi, dans une étape initiale E00 de réception de la phase d'apprentissage P0, l'équipement de détection 12 reçoit une requête en provenance du dispositif client 11 et à destination du serveur 10. Il mémorise un type de requête associé à la requête et retransmet la requête au serveur 10. Le type de requête associé à la requête est défini comme étant représentatif d'une requête, ou commun à une pluralité de requêtes. Ainsi, dans l'exemple d'un accès à un service web permettant d'obtenir un mail associé à un nom d'utilisateur donné, une requête est de la forme : « http://www.webservice.com/application/form1?user=name1 », où « name1 » précise le nom de la personne dont on souhaite obtenir l'adresse e-mail. Le type de requête associé est alors de la forme « http://www.webservice.com/application/form1 ». En d'autres termes, la requête correspond à une instanciation du type de la requête.

Dans une étape E01 de réponse, l'équipement de détection 12 reçoit du serveur 10 une réponse à la requête reçue précédemment et à destination du dispositif client 11. Il mémorise cette réponse et la retransmet au dispositif client 11.

Dans une étape E02 de décomposition de la réponse, le dispositif de détection 12 décompose la réponse reçue au cours de l'étape E01 en mots qui la composent. Dans un exemple de réalisation, la décomposition de la réponse reçue en mots repose sur des notions syntaxiques et utilise des caractères séparateurs tels que des espaces et des signes de ponctuation comme les points, les virgules, les tirets, etc. On suppose que la réponse se compose de $p$ mots.

Dans une étape suivante E03 de création d'un vecteur de bits, le dispositif de détection 12 génère un vecteur modèle initial de $n$ bits, noté $V_{mod}$ pour la réponse reçue. Le vecteur modèle $V_{mod}$ est initialisé à zéro. Il est destiné à modéliser sous forme d'un vecteur de bits les réponses reçues en réponse aux requêtes du type donné.

Dans une étape suivante E04 de calcul du vecteur, le dispositif de détection 12 calcule le vecteur modèle $V_{mod}$ à partir des différents mots qui composent la réponse reçue et qui ont été obtenus au cours de l'étape E02 de décom-

position. Chaque mot $M_i$, $1 \le i \le p$, de la réponse est ainsi converti au format binaire à partir de la valeur numérique des caractères qui le composent. Il est ensuite appliqué à chaque mot $M_i$ au format binaire une fonction de hachage H afin d'obtenir une empreinte $E_i$ du mot $M_i$ sous forme d'une valeur numérique. A chacune des empreintes $E_i$ générée, il est ensuite associé une position $P_j$, $1 \le j \le n$, dans le vecteur modèle $V_{mod}$ selon la formule suivante : $P_j = H(M_i)$ mod n. En d'autres termes, la position $P_j$ dans le vecteur modèle $V_{mod}$ est obtenue en appliquant la fonction de hachage H au mot $M_i$, modulo la taille n du vecteur $V_{mod}$. Le Pj-ième bit $B_j$ du vecteur modèle $V_{mod}$ est alors positionné à 1. Ainsi, un bit positionné à 1 en Pj-ième position est représentatif de la présence du mot $M_i$ dans la réponse à la requête. Dans un exemple de réalisation, la fonction de hachage H est la fonction SHA-1 (de l'anglais « Secure Hashing Algorithm 1 »). L'invention n'est bien sûr pas limitée à cette fonction et dans d'autres exemples de réalisation des fonctions telles que SHA-2, MD-5 (de l'anglais « Message Digest 5») peuvent être utilisées.

La taille n du vecteur modèle $V_{mod}$ est choisie de telle manière que la probabilité d'avoir des collisions au niveau des positions $P_j$, c'est-à-dire d'avoir deux mots différents représentés par le même bit, est faible. L'utilisation d'un vecteur de bits pour représenter les mots qui composent la réponse à la requête permet de faire un inventaire des mots qui composent la réponse en faisant abstraction de doublons. En effet, si un mot apparaît plusieurs fois dans la réponse, il est représenté par le même bit dans le vecteur modèle $V_{mod}$. Par ailleurs, on comprend qu'avec une telle représentation, il n'est pas nécessaire de mémoriser les mots qui composent la réponse. D'autre part, un mot de longueur quelconque est toujours représenté par un bit. On comprend que le gain en espace mémoire pour le dispositif 12 de détection est non négligeable.

Le vecteur modèle $V_{mod}$ est ensuite affiné en réitérant les étapes précédentes. Les itérations suivantes sont destinées à calculer des indicateurs propres à chacun des types de requêtes.

Ainsi, dans une deuxième itération des étapes E00 à E04, notée E00' à E04', une deuxième requête, à destination du serveur 10 est reçue par le dispositif de détection 12 et retransmise au serveur 10. On suppose que la deuxième requête est différente de la requête reçue au cours de l'étape E00 mais que le type de la deuxième requête est le même que le type de la requête reçue au cours de l'étape E00. En d'autres termes la deuxième requête est de la forme « http://www.webservice.com/application/form1?user = name2 » ; elle est donc du même type que la requête de la forme « http://www.webservice.com/application/form1 » mais concerne un autre utilisateur. Dans une étape E01' de réponse, similaire à l'étape E01, la réponse à la deuxième requête, appelée deuxième réponse, est reçue et mémorisée par le dispositif de détection 12 puis transmise au dispositif client 11. Dans une étape E02' de décomposition de la réponse, similaire à l'étape E02, la deuxième réponse est décomposée en mots. Dans une étape E03' de création du vecteur de bits, un deuxième vecteur de bits $V_2$ est généré et initialisé à zéro. Enfin, dans une étape E04' de calcul du vecteur, similaire à l'étape E04 précédente, le deuxième vecteur de bits $V_2$ est calculé à partir des mots qui composent la deuxième réponse, de la même manière que le vecteur modèle $V_{mod}$.

Dans une étape E05' de mise à jour du vecteur modèle, le vecteur modèle $V_{mod}$ calculé au cours de l'étape E04 est mis à jour. A cet effet on applique l'opérateur logique ET (ou « AND ») aux vecteurs $V_{mod}$ et $V_2$. En d'autres termes, le vecteur modèle $V_{mod}$ est mis à jour selon la formule suivante : $V_{mod} = V_{mod}$ AND $V_2$. Pour mémoire, l'opérateur logique ET a pour résultat 1 si et seulement si les deux bits additionnés ont eux-mêmes la valeur 1. Le vecteur modèle mis à jour $V_{mod}$ représente donc l'intersection entre les deux vecteurs $V_{mod}$ et $V_2$ et correspond donc à un contenu de la réponse présent dans les deux réponses comparées.

Dans une étape E06' de calcul d'un indice de similarité, il est calculé un indice de similarité IS entre le vecteur modèle $V_{mod}$ ainsi obtenu et le deuxième vecteur $V_2$. Cet indice de similarité IS correspond à la distance entre les deux vecteurs $V_{mod}$ et $V_2$. Il peut être calculé comme la somme des éléments communs entre les deux vecteurs, moins la somme des éléments différents, divisé par la taille des vecteurs considérés. En d'autres termes :

$$IS = \frac{\sum \text{éléments identiques } (V_{mod}, V_2) - \sum \text{éléments différents } (V_{mod}, V_2)}{n}$$

Les étapes E00' à E06' sont itérées un nombre prédéfini de fois. Ainsi, au cours d'une itération suivante, le dispositif 11 reçoit une réponse suivante consécutive à une requête suivante du dispositif client 11 au serveur 10. On suppose que la requête suivante est du même type que les requêtes précédentes. Dans une étape E02", similaire aux étapes E02 et E02', la réponse suivante est décomposée en mots. Dans une étape E03", similaire aux étapes E03 et E03' un vecteur de bits suivants $V_s$ est généré et initialisé à zéro. Enfin, dans une étape E04", similaire aux étapes E04 et E04' précédentes, le vecteur suivant $V_s$ est calculé à partir des mots qui composent la troisième réponse, de la même manière que les vecteurs $V_{mod}$ et $V_2$.

Dans une étape E05" de mise à jour du vecteur modèle, le vecteur modèle $V_{mod}$, obtenu au cours de l'étape E05' précédente est mis à jour. L'opérateur logique ET (ou AND) est appliqué aux vecteurs $V_{mod}$ et $V_s$. En d'autres termes, il est calculé $V_{mod} = V_{mod}$ AND $V_s$. Le vecteur modèle mis à jour $V_{mod}$ représente l'intersection entre les trois vecteurs $V_{mod}$ et $V_2$ et $V_s$ et correspond donc à un contenu présent dans les réponses comparées. On comprend qu'avec ces itérations successives, le vecteur modèle $V_{mod}$ est affiné grâce aux mises à jour successives.

Dans une étape E06" de calcul d'un nouvel indice de similarité, il est calculé un indice de similarité suivant IS' entre le vecteur modèle $V_{mod}$ ainsi obtenu et le vecteur suivant $V_s$. Cet indice de similarité suivant IS' correspond à la distance entre les deux vecteurs $V_{mod}$ et $V_s$. Il peut être calculé comme la somme des éléments communs, moins la somme des éléments différents, divisé par la taille des vecteurs considérés. En d'autres termes :

$$IS' = \frac{\sum \text{éléments identiques} (V_{\text{mod}}, V_s) - \sum \text{éléments différents}(V_{\text{mod}}, V_s)}{n}$$

Dans une étape suivante E07" de calcul de moyenne et d'écart-type, il est calculé une moyenne $M_{IS}$ des indices de similarités obtenus au cours des étapes E06' et E06", ainsi que l'écart-type $\sigma_{IS}$ de ces indices. Il est connu que l'écart-type mesure la variation de variables, ici les indices de similarité, par rapport à la moyenne.

Dans une étape E08" de test, il est vérifié si l'écart-type $\sigma_{IS}$ est différent de zéro. Dans un premier cas où l'écart-type $\sigma_{IS}$ est différent de zéro (branche « ok » sur la figure 1), alors dans une étape E09" de calcul d'un intervalle de conformité, il est calculé un premier seuil de variabilité $T_{mod\_inf}$ et un deuxième seuil de variabilité $T_{mod\_sup}$ qui constituent respectivement les bornes inférieure et supérieure d'un intervalle de conformité représentatif de la conformité d'une réponse au vecteur modèle calculé pour ce type de requête, en fonction de la divergence mesurée entre les réponses reçues. Dans un exemple de réalisation, le premier seuil de variabilité $T_{mod\_inf}$ est calculé selon la formule suivante :

$$T_{mod\_inf} = M_{IS} - 3 * \sigma_{IS}$$

Le deuxième seuil de variabilité $T_{mod\_sup}$ est calculé selon la formule suivante :

$$T_{mod\_sup} = M_{IS} + 3 * \sigma_{IS}$$

Le premier et le deuxième seuils $T_{mod\_inf}$, $T_{mod\_sup}$ constituent les bornes inférieure et supérieure de l'intervalle de conformité *IC.* En d'autres termes :

$$IC = \left[ T_{mod\_inf}, T_{mod\_sup} \right]$$

L'intervalle de conformité IC représente, pour un type de requête donné, une mesure selon laquelle un contenu reçu en réponse à une requête de ce type est assimilé à une réponse attendue. Ainsi, une réponse à une requête du type donné doit être suffisamment proche du vecteur modèle pour être assimilée à une réponse normale ou attendue pour ce type de requête.

La formule de calcul proposée ci-dessus permet de largement limiter le nombre de faux-positifs. Un faux-positif correspond à une réponse à une requête d'un type donné qui est assimilée à une anomalie alors qu'en réalité, elle ne l'est pas. En effet, il est connu que l'écart-type et la moyenne permettent de déterminer un intervalle dans lequel se trouve la majorité d'une population d'un échantillon de valeurs. En l'occurrence, il est connu que la répartition des valeurs d'un échantillon est conforme à une représentation graphique d'une loi normale et que dans un intervalle [-3 * $\sigma_{IS}$, +3 * $\sigma_{IS}$] autour de la moyenne, se trouve 98% de la distribution de l'échantillon.

Dans un deuxième cas où l'écart-type $\sigma_{IS}$ est nul (branche « nok » sur la figure 1), correspondant à un cas où les réponses analysées lors de la phase d'apprentissage sont toutes identiques, la phase d'apprentissage est poursuivie pendant un nombre maximal d'itérations. En d'autres termes, les étapes E00" à E08" sont itérées pendant le nombre maximal d'itérations. Si le nombre maximal d'itérations est atteint et que l'écart-type $\sigma_{IS}$ est toujours nul, alors la phase d'apprentissage est interrompue. Dans ce cas, tous les vecteurs de bits générés à partir des réponses aux requêtes de même type sont strictement identiques au vecteur modèle initial $V_{mod}$ généré au cours de l'étape E04 de calcul du vecteur. Cela signifie que le contenu des réponses est statique. En d'autres termes, pour ce type de requête, toutes les réponses sont identiques.

L'apprentissage décrit ici met en oeuvre, pour une requête de même type, une itération des étapes E00 à E04, destinée à calculer le vecteur modèle initial $V_{mod}$ et au moins deux itérations successives des étapes E00' à E06' destinées à mettre à jour le vecteur modèle $V_{mod}$ et à calculer des indices de similarités entre les nouveaux vecteurs calculés au cours des étapes E04' et E04" et le vecteur modèle $V_{mod}$. Ce nombre d'itérations est un nombre minimal destiné à calculer une moyenne et un écart-type des indices de similarité. Cependant, l'invention n'est pas limitée à ce nombre d'itérations. Ainsi, dans un autre exemple de réalisation, on peut effectuer une dizaine ou une vingtaine d'itérations des étapes E00' à E06' ou E00" à E06" afin d'affiner au mieux les valeurs de la moyenne et de l'écart-type utilisées pour calculer les premier et deuxième seuils de variabilité $T_{mod\_inf}$ et $T_{mod\_sup}$.

Dans l'exemple de réalisation décrit ici, les itérations sont mises en oeuvre pour chaque requête d'un type donné. Dans une variante de réalisation, les itérations successives sont mises en oeuvre selon une fréquence donnée. Par exemple il est procédé à une itération des étapes E00' à E06' ou E00" à E06" par jour pendant une durée donnée, par exemple un mois. Procéder ainsi pour mettre en oeuvre la phase d'apprentissage P0 peut s'avérer intéressant dans le cas d'un service web qui met à jour sa page d'accueil régulièrement, par exemple tous les jours. Dans un autre exemple de réalisation, les itérations seront réparties sur une période de vingt quatre heures pour prendre en compte des évolutions connues du service sur cette période.

Dans un autre exemple de réalisation, le nombre d'itérations est déterminé dynamiquement en comparant l'écart-type obtenu entre une m-ième itération et deux itérations précédentes, c'est-à-dire les (m-1)-ième et (m-2)-ième itérations, m > 4. Si la variation entre ces trois valeurs d'écart-type est inférieure à une valeur donnée, alors le vecteur modèle est considéré comme construit. La valeur donnée est par exemple de l'ordre de deux pour cent. En effet, on estime dans ce cas, que le vecteur modèle calculé à partir des itérations précédentes est déjà suffisamment précis.

Dans le mode de réalisation décrit ici, les étapes E02, E02', E02" de création du vecteur de bits utilisent des signes de ponctuation pour décomposer la réponse reçue en mots. L'invention n'est pas limitée aux signes de ponctuation. Ainsi, dans un autre exemple de réalisation, des notions linguistiques telles que les kanji, les kana ou les romaji chinois ou japonais peuvent être utilisées pour décomposer la réponse en mots. Dans un autre exemple de réalisation, des notions informatiques telles qu'un encodage et une valeur des caractères utilisés peuvent être utilisées.

Dans l'exemple de réalisation décrit ici, il n'est pas précisé la valeur n correspondant à la taille des vecteurs de bits utilisé pour représenter le vecteur modèle initial $V_{mod}$ et les vecteurs obtenus à partir des réponses analysées lors des itérations consécutives à la construction du vecteur modèle initial $V_{mod}$. Un vecteur, que ce soit le vecteur modèle initial, le vecteur modèle $V_{mod}$ mis à jour, ou le vecteur obtenu à partir de l'analyse d'une réponse, est censé représenté au moyen de bits un ensemble de mots qui constituent une réponse à une requête. En quelque sorte, un vecteur est destiné à modéliser un dictionnaire de mots. Il est connu qu'une conversation courante fait intervenir à peu près deux mille mots. Ainsi, n est choisi de telle manière qu'il est compris entre 4000 et 400000, soit 4 Kbits $\leq$ n $\leq$ 400 Kbits. La valeur de n, comprise dans l'intervalle ci-dessus peut être affinée et fixée en fonction de la taille moyenne des réponses aux requêtes. Ainsi, il a été déterminé de manière empirique que n pouvait être fixé à 5% de la taille moyenne des réponses, plus précisément à un nombre de Kbits proche de 5% de la taille moyenne des réponses. La détermination de la taille n des vecteurs destinés à représenter les réponses aux requêtes permet d'éviter des collisions lors de la représentation des mots d'une réponse dans le vecteur. Une collision se produit lorsqu'à deux mots différents $M_p$ et $M_q$, p ≠ q est associée une même position k dans un vecteur de bits. En d'autres termes il y a collision lorsque $P_k = H(M_p)$ mod n = $H(M_q)$ mod n.

Par ailleurs, on estime que la valeur de n est insuffisante dès lors qu'un vecteur destiné à représenter une réponse est rempli à 70%, c'est-à-dire lorsque 70% de ses bits sont positionnés à 1. Ainsi, il est possible, lors de la mise en oeuvre de la phase d'apprentissage P0, de détecter que le dimensionnement des vecteurs de bits est insuffisant en vérifiant le taux de bits positionnés à 1 dans les vecteurs destinés à représentés des réponses. Si ce taux est supérieur à 70%, la phase d'apprentissage P0 est interrompue, la taille des vecteurs de bits est doublée et une nouvelle phase d'apprentissage P0 est mise en oeuvre.

Dans un exemple de réalisation, et afin de faire abstraction d'un vocabulaire non significatif dans des réponses à des requêtes il est soustrait un vecteur de filtrage $V_{dict}$ représentatif du vocabulaire non significatif aux différents vecteurs construits durant la phase d'apprentissage, c'est-à-dire le vecteur modèle $V_{mod}$ et les nouveaux vecteurs $V_2$, $V_s$, etc. Le vecteur de filtrage $V_{dict}$ est construit de la même manière que le vecteur modèle $V_{mod}$ et que les vecteurs $V_2$, $V_s$, à partir d'un dictionnaire de mots jugés non significatifs dans un contenu. Par exemple, dans le cas de requêtes et de réponses associées au format « HTML » (de l'anglais « Hyper Text Transfer Protocol »), le dictionnaire utilisé pour construire le vecteur de filtrage comprend des balises HTML telles que « a », « href », « img », « class », etc. En effet, ces balises ne sont pas significatives d'un point de vue sémantique. Ainsi, pour les différents mots compris dans le dictionnaire, il est obtenu une forme binaire, puis il est appliqué la fonction de hachage H à la forme binaire obtenue, modulo n. La valeur obtenue correspond à une position $P_k$ dans le vecteur de filtrage $V_{dict}$. Le bit situé en $P_k$-ième position est alors positionné à 1.

Le vecteur de filtrage $V_{dict}$ est ensuite utilisé durant la phase d'apprentissage P0. Le vecteur de filtrage $V_{dict}$ est ainsi soustrait de chacun des vecteurs manipulés. Ainsi, durant l'étape E04 de calcul du vecteur modèle, le vecteur de filtrage $V_{dict}$ est soustrait au vecteur modèle initial $V_{mod}$. Le vecteur de filtrage $V_{dict}$ est également soustrait des vecteurs de bits $V_2$ et $V_s$ obtenus lors des étapes E04' et E04". La soustraction du vecteur de filtrage $V_{dict}$ à un vecteur de bits courant $V_{cour}$ afin d'obtenir un vecteur résultant $V_{res}$ peut être mise en oeuvre en appliquant une opération de ET (ou « AND ») suivi d'une opération de OU EXCLUSIF (ou « XOR »). En d'autres termes :

$$V_{res} = (V_{cour} \ AND \ V_{dict}) \ XOR \ V_{cour}$$

Filtrer un vocabulaire non significatif permet d'optimiser l'espace mémoire nécessaire à la mémorisation des vecteurs de bits $V_{mod}$, $V_2$ et $V_s$. Par ailleurs, on élimine ainsi, lors du calcul des moyenne et écart-type utilisés pour le calcul des seuils de variabilité $T_{mod\_inf}$ et $T_{mod\_sup}$ les mots sémantiquement non significatifs en termes de sécurité. On comprend que l'intervalle de conformité $IC$ établi à partir des seuils de variabilité ainsi calculés est plus précis que s'il est établi à partir d'indicateurs basés sur des contenus qui tiennent compte entre autres de mots non significatifs.

La phase de détection P1 du procédé de détection, selon un exemple de réalisation de l'invention, va maintenant être décrite en relation avec la figure 2.

On considère qu'à ce stade, la phase d'apprentissage décrite en relation avec la figure 1 a été mise en oeuvre et qu'il a été calculé, pour chaque type de requête que le serveur 10 peut traiter un intervalle de conformité $IC$ représentatif d'une distance tolérée entre une réponse envoyée suite à une requête du même type et un modèle de réponse calculé pour ce type de requête.

Dans une étape initiale d'interrogation E10 de la phase de détection P1, le dispositif de détection 12 reçoit une requête en provenance du dispositif client 11 et à destination du serveur 10. Le dispositif de détection 12 mémorise la requête et la retransmet au serveur 10.

Dans une étape suivante E11 de réponse, le dispositif de détection 12 reçoit du serveur 10 une réponse à la requête. Le dispositif de détection 12 mémorise la réponse et la retransmet au dispositif client 11.

Dans une étape E12 d'analyse, le type de la requête à l'origine de l'envoi de la réponse est analysé et il est obtenu pour ce type de requête, l'intervalle de conformité $IC$ et le vecteur modèle $V_{mod}$ calculés pour ce type de requête durant la phase d'apprentissage P0. Pour mémoire l'intervalle de conformité IC est défini à partir du premier et du deuxième seuil de variabilité $T_{mod\_inf}$ et $T_{mod\_sup}$ : $IC = [T_{mod\_inf}, T_{mod\_sup}]$.

Dans une étape E13 de modélisation en vecteur binaire, il est calculé un vecteur binaire courant $V_N$ représentatif de la réponse reçue, de la même manière que lors des étapes de calcul du vecteur E04 de la phase d'apprentissage P0.

Dans une étape E14 de test il est vérifié si le contenu des réponses a été identifié comme statique durant l'étape E08" de test de la phase d'apprentissage P0. Pour mémoire le test effectué au cours de l'étape E08" indique que le contenu des réponses est statique pour un type de requête donné lorsque l'écart-type des indices de similarité calculé au cours de l'étape E07" de calcul de moyenne et d'écart-type est égal à zéro.

Dans un premier cas où le contenu des réponses aux requêtes du type donné a été identifié comme statique durant la phase d'apprentissage P0 (branche « ok » sur la figure 2), le vecteur modèle $V_{mod}$ est comparé au vecteur courant $V_N$ dans une étape E15 de comparaison. Dans un cas où les deux vecteurs sont identiques (branche « ok » sur la figure 2), la réponse reçue et modélisée par le vecteur $V_N$ est considérée comme normale. En effet, dans le cas d'un contenu statique, il est normal que le vecteur de bits courant $V_N$ soit identique au vecteur de bits modèle $V_{mod}$ puisque deux réponses à une requête de même type sont identiques. Les vecteurs de bits qui modélisent ces réponses sont donc a fortiori identiques. Dans le cas contraire (branche « nok » sur la figure 2), c'est-à-dire dans le cas où le contenu associé à ce type de requête a été identifié comme statique en phase d'apprentissage P0 et le vecteur courant $V_N$ calculé à partir de la réponse reçue n'est pas identique au vecteur modèle $V_{mod}$, alors une alerte est levée au cours d'une étape E16 d'alerte. En effet, dans le cas d'un contenu statique, toutes les réponses à des requêtes d'un même type sont censées être identiques, ce qui n'est pas le cas ici. Ce cas de figure est adapté pour la détection d'une attaque d'un site web durant laquelle un pirate a modifié la présentation du site web. Une telle attaque est habituellement appelée défiguration, ou « defacement » en anglais.

Dans un cas où le test effectué au cours de l'étape E14 est négatif (branche « nok » sur la figure 2), c'est-à-dire dans un cas où le contenu des réponses aux requêtes du type donné n'a pas été identifié comme statique durant la phase d'apprentissage P0, alors il est calculé durant une étape E17 de calcul d'un indice de similarité courant, un indice de similarité courant $IS_c$ entre le vecteur modèle $V_{mod}$ calculé durant la phase d'apprentissage et le vecteur courant $V_N$.

Dans une étape E18 de vérification vis-à-vis de l'intervalle de conformité, il est vérifié que l'indice de similarité courant $IS_c$ est compris dans l'intervalle de conformité $IC$ calculé durant la phase d'apprentissage P0 pour le type de requête courant.

Dans un premier cas où l'indice de similarité courant $IS_c$ est compris dans l'intervalle de conformité $IC$ (cas « ok » sur la figure 2), c'est-à-dire lorsque l'indice de similarité courant $IS_c$ est supérieur ou égal au premier seuil de variabilité $T_{mod\_inf}$ et inférieur ou égal au deuxième seuil de variabilité $T_{mod\_sup}$ alors la réponse courante est considérée comme normale. Dans le cas contraire (branche « nok » sur la figure 2), une alerte est levée au cours de l'étape E16 d'alerte. En effet, dans ce cas la différence entre la réponse analysée et le vecteur modèle calculé en phase d'apprentissage P0 excède le seuil défini pour ce vecteur modèle, la réponse est donc considérée comme anormale.

Dans l'étape d'alerte E16, le dispositif de détection 12 peut par exemple bloquer le trafic correspondant à des réponses à des requêtes de ce type.

Dans un autre exemple de réalisation (non représenté sur la figure 1), durant l'étape d'alerte E16, il est déterminé si l'indice de similarité courant $IS_c$ est inférieur au premier seuil de variabilité $T_{mod\_inf}$ ou supérieur au deuxième seuil de variabilité $T_{mod\_sup}$, afin d'affiner le type d'anomalie détectée. Dans un premier cas où l'indice de similarité courant $IS_c$ est inférieur au premier seuil de variabilité $T_{mod\_inf}$, l'anomalie est de type attaque par fuite de données. Dans le cas de l'exemple du service web, cela correspond à une réponse analysée qui comprend une pluralité d'adresses e-mail d'utilisateurs. Dans ce cas, la réponse analysée s'écarte du vecteur de bits modèle calculé au-delà de ce qui est toléré. Dans un deuxième cas où l'indice de similarité courant $IS_c$ est supérieur au deuxième seuil de variabilité $T_{mod\_sup}$, l'anomalie est à comparer à un comportement anormal du service et peut correspondre à une attaque qui tend à rendre le service inopérant. En effet, dans ce cas, la réponse analysée est très proche du vecteur de bits modèle construit de manière théorique, ce qui n'est pas possible dans le cas d'un service dynamique.

Dans un exemple de réalisation où le vecteur de filtrage filtre $V_{dict}$ destiné à tenir compte d'un vocabulaire non significatif est utilisé durant la phase d'apprentissage P0, ce vecteur filtre est également utilisé en phase de détection. Ainsi, dans ce cas, le même vecteur filtre $V_{dict}$ que celui utilisé en phase d'apprentissage est soustrait au vecteur binaire courant $V_N$ durant l'étape E13 de modélisation en vecteur binaire. Ainsi, les vecteurs $V_{mod}$ et $V_N$ qui sont comparés dans l'étape E15 de comparaison sont comparables.

Dans l'exemple des requêtes à un serveur web destinées à obtenir l'adresse e-mail d'un utilisateur, une requête malicieuse interceptée par le dispositif de détection 12 et émanant d'un attaquant peut par exemple être de la forme suivante : « http://www.webservice.com/application/form1?user=' OR 1=1-- ». Cette requête est du type : « http://www.webservice.com/application/form1 » pour lequel un vecteur modèle $V_{mod}$ et un seuil de variabilité $T_{mod}$ ont été calculés au cours de la phase d'apprentissage P0. En réponse à cette requête, le serveur 10, mal sécurisé, va fournir en réponse un ensemble de données, par exemple la totalité des adresses e-mail qu'il mémorise :

```
<html>
...
<h1>Résultat de votre requête</h1>
<p>name1.surname1@domain1 name2.surname2@domain2 ... </p>
...
</html>
```

Conformément aux étapes de la phase de détection décrites précédemment, le dispositif de détection 12 construit un vecteur binaire courant pour cette réponse au cours de l'étape E13 de modélisation en vecteur binaire et calcule durant l'étape E17 son indice de similarité courant avec le vecteur de bits modèle. L'analyse de la réponse résultant de l'attaque va entraîner une variation anormale de l'indice de similarité courant par rapport à un trafic dit normal pour lequel il a été calculé le seuil de variabilité.

L'invention est décrite ici dans le cas de flux web. Cependant l'invention n'est pas limitée à ce cas de figure et peut être appliquée pour différents protocoles tels que des flux propres à des interrogations de bases de données, des flux « SIP » (de l'anglais « Session Initiation Protocol ») utilisés dans le cadre de la voix sur IP (« VoIP » en anglais).

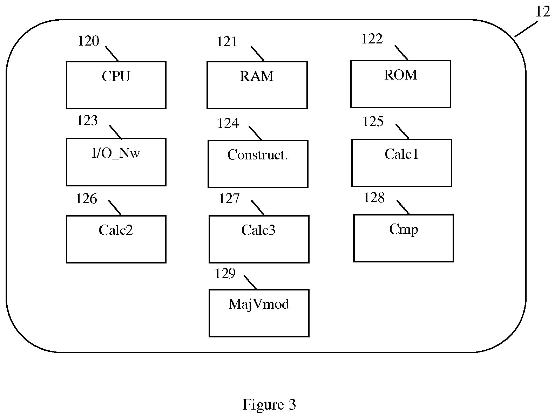

Un dispositif de détection 12, selon un exemple de réalisation de l'invention, va maintenant être décrit en relation avec la figure 3.

Le dispositif de détection est un équipement informatique, tel qu'un terminal ou un serveur informatique, adapté pour être placé dans un réseau entre un dispositif client 11 et un serveur 10 apte à délivrer un service au dispositif client 11 (le dispositif client 11 et le serveur 10 ne sont pas représentés sur la figure 3).

Le dispositif de détection comprend :

- un microprocesseur 120, ou «CPU» (de l'anglais «Central Processing Unit »), destiné à charger des instructions en mémoire, à les exécuter, à effectuer des opérations ;

- un ensemble de mémoires, dont une mémoire volatile 121, ou « RAM » (pour « Random Access Memory ») utilisée pour exécuter des instructions de code, stocker des variables, etc., une mémoire de stockage 122 de type « ROM » ou « EEPROM » (de l'anglais « Read Only Memory » et « « Electronically-Erasable Programmable Read-Only Memory »). La mémoire de stockage 122 est agencée pour mémoriser une application qui comprend des instructions de code pour mettre en oeuvre les étapes du procédé de détection d'anomalies dans un trafic réseau. La mémoire de stockage 122 est également agencée pour mémoriser des indicateurs calculés lors de la phase d'apprentissage, en l'espèce le vecteur modèle l'écart-type et l'intervalle de conformité. Ces indicateurs sont destinés à être utilisés pendant la phase de détection ;

- des interfaces réseau 123, agencées pour communiquer d'une part avec le dispositif client 11 et d'autre part avec le serveur 10. Plus précisément, le dispositif de détection 12 est en coupure entre ces deux équipements et est agencé pour recevoir une requête d'un type donné en provenance du dispositif client 11, et pour recevoir une réponse à la requête du type donné en provenance du serveur 10. La requête et la réponse sont reçues en phase d'apprentissage P0 et/ou en phase de détection P1. Les interfaces réseau 123 sont agencées pour mettre en oeuvre les étapes E00 de réception et E01 de réponse de la phase d'apprentissage P0, et E10 d'interrogation et E11 de réponse de la phase de détection P1 du procédé décrit précédemment ;

- un module 124 de construction de vecteurs de bits, agencé pour construire des vecteurs de bits à partir des réponses reçues. Le module de construction 124 est ainsi adapté pour construire aussi bien le vecteur de bits modèle que les vecteurs de bits suivants. Le module 124 de construction est agencé pour mettre en oeuvre les étapes E03, E03', E03" de création d'un vecteur de bits et E04, E04', E04" de calcul du vecteur de la phase d'apprentissage P0 du procédé décrit précédemment. Il est également agencé pour mettre en oeuvre l'étape E13 de modélisation en vecteur binaire de la phase de détection du procédé décrit précédemment ;

- un premier module de calcul 125, agencé pour calculer des indices de similarité représentatifs de distances entre le vecteur de bits modèle et un vecteur de bit suivant ou courant. Le premier module de calcul 125 est mis en oeuvre pendant la phase d'apprentissage P0 et pendant la phase de détection P1. Le premier module de calcul 125 est agencé pour mettre en oeuvre les étapes E06' et E06" de calcul d'un indice de similarité de la phase d'apprentissage P0 et E17 de calcul d'un indice de similarité de la phase de détection du procédé décrit précédemment ;

- un deuxième module de calcul 126, agencé pour calculer une moyenne des indices de similarité et un écart-type entre ces indices. Le deuxième module de calcul 126 est agencé pour mettre en oeuvre l'étape E07" de calcul de moyenne et d'écart-type de la phase d'apprentissage P0 du procédé de détection décrit précédemment ;

- un troisième module de calcul 127, agencé pour calculer un intervalle de conformité pour un vecteur de bits modèle durant la phase d'apprentissage P0. Par exemple, l'intervalle de conformité est calculé à partir d'un premier seuil de variabilité $T_{mod\_inf}$ et d'un deuxième seuil de variabilité $T_{mod\_sup}$, calculés selon les formules suivantes :

$$T_{mod\_inf} = M_{IS} - 3 * \sigma_{IS}$$

$$T_{mod\_sup} = M_{IS} + 3 * \sigma_{IS}$$

$$IC = \left[ T_{mod\_inf}, T_{mod\_sup} \right],$$

où $M_{IS}$ représente une moyenne entre plusieurs indices de similarité et $\sigma_{IS}$ l'écart-type entre ces indices. Le troisième module de calcul 127 est agencé pour mettre en oeuvre l'étape E09" de calcul d'un intervalle de conformité de la phase d'apprentissage P0 du procédé précédemment décrit ;

- un module de vérification 128, agencé pour vérifier qu'un indice de similarité calculé par le premier module de calcul 125 est compris dans l'intervalle de conformité *IC,* calculé préalablement par le deuxième module de calcul 126. Le module de vérification 128 est agencé pour mettre en oeuvre l'étape E18 de vérification vis-à-vis de l'intervalle de conformité de la phase de détection P1 du procédé décrit précédemment ;

- un module 129 de mise à jour du vecteur modèle, agencé pour mettre à jour le vecteur modèle construit par le module de construction 124, à partir d'un vecteur de bits suivant. Le module de mise à jour 129 est agencé pour mettre en oeuvre les étapes E05' et E05" de mise à jour du vecteur modèle de la phase d'apprentissage P0 du procédé précédemment décrit ;

Le module 124 de construction de vecteurs de bits, les premier 125, deuxième 126 et troisième 127 modules de calcul, le module de vérification 128, le module 129 de mise à jour du vecteur modèle sont de préférence des modules logiciels comprenant des instructions logicielles pour faire exécuter les étapes du procédé de détection d'anomalies dans un trafic réseau précédemment décrit.

L'invention concerne donc aussi :

- un programme d'ordinateur comportant des instructions pour la mise en oeuvre du procédé de détection d'anomalie tel que décrit précédemment lorsque ce programme est exécuté par un processeur du dispositif de détection 12 ;

- un support d'enregistrement lisible sur lequel est enregistré le programme d'ordinateur décrit ci-dessus.

Les modules logiciels peuvent être stockés dans, ou transmis par un support de données. Celui-ci peut être un support matériel de stockage, par exemple un CD-ROM, une disquette magnétique ou un disque dur, ou bien un support de transmission tel qu'un signal ou un réseau de télécommunications.

Dans une variante de réalisation, les premier 125, deuxième 126 et troisième 127 modules de calcul, le module de vérification 128 et le module 129 de mise à jour du vecteur modèle sont définis comme des portes d'un circuit logique programmable. Un exemple d'un tel circuit est une carte « FPGA » (de l'anglais « Field-Programmable Gate Array »).

**Revendications**

1. Procédé de détection d'anomalies dans un trafic réseau, ledit trafic étant transmis par un serveur (10) en réponse à des requêtes d'au moins un dispositif client (11), le procédé comprenant :

   - une étape (E10) de réception d'une requête, ladite requête étant d'un type donné,
   - une étape (E11) de réception d'une réponse à la requête,
   - une étape (E13) de construction d'un vecteur de bits courant ($V_N$), représentatif de la réponse,
   - une étape (E17) de calcul d'un indice de similarité représentatif d'une distance entre le vecteur de bits courant et un vecteur de bits modèle ($V_{mod}$) associé au type de la requête,
   - une étape de vérification (E18) que l'indice de similarité ($IS_c$) appartient à un intervalle de conformité ($IC$) calculé pour le type de requête, une anomalie étant détectée lorsque l'indice de similarité n'appartient pas à l'intervalle de conformité.

2. Procédé de détection d'anomalies selon la revendication 1, comprenant une phase d'apprentissage (P0), la phase d'apprentissage comprenant :

   - une étape (E00) de réception d'une requête initiale, la requête initiale étant du type donné,
   - une étape (E01) de réception d'une réponse initiale à la requête initiale,
   - une étape (E03) de construction d'un vecteur de bits modèle, représentatif de la réponse initiale,
   - une étape (E03', E03") de mise à jour du vecteur modèle à partir d'un vecteur de bits suivant, construit à partir d'une réponse suivante reçue consécutivement à une requête suivante du type donné,
   - une étape (E06', E06") de calcul d'un indice de similarité entre le vecteur modèle mis à jour et le vecteur de bits suivant, les étapes de mise à jour et de calcul de l'indice de similarité étant réitérées au moins une fois,
   - une étape (E07") de calcul d'une moyenne des indices de similarité calculés et d'un écart-type de ces indices,
   - une étape (E09") de calcul de l'intervalle de conformité à partir de la moyenne des indices et de l'écart-type.

3. Procédé de détection d'anomalies selon la revendication 2, dans lequel l'intervalle de conformité (IC) est défini au moyen de la moyenne $M_{IS}$ des indices de similarité calculés et de l'écart-type $\sigma_{IS}$ de ces indices, selon la formule suivante :

$$IC = [M_{IS} - 3 * \sigma, M_{IS} + 3 * \sigma]$$

4. Procédé de détection selon l'une des revendications précédentes, dans lequel la construction d'un vecteur de bits à partir d'une réponse à une requête comprend les étapes suivantes :

   - décomposition de la réponse en mots qui la composent,
   - calcul d'une position Pj, $1 \leq j \leq n$, dans le vecteur de bits, ladite position étant associée à un des mots par mise en oeuvre des étapes suivantes :

     - conversion dudit mot en une forme binaire,
     - obtention de la position Pj dans le vecteur par application modulo n d'une fonction de hachage à ladite forme binaire obtenue, et
     - positionnement du Pj-ième bit à 1.

5. Procédé de détection selon l'une des revendications 2 à 4, comprenant également une étape de filtrage durant laquelle un vecteur de bits de filtrage comprenant une représentation d'un ensemble de mots non significatifs est soustrait au vecteur modèle et au vecteur de bits suivant avant la mise à jour du vecteur modèle à partir du vecteur de bits suivant.

6. Procédé selon la revendication 4, dans lequel la taille du vecteur de bits est un nombre d'octets compris entre 4Kbits et 400Kbits.

**7.** Procédé selon la revendication 6, dans lequel un ordre de grandeur de la taille du vecteur de bits est de 5% d'une taille moyenne de réponses à des requêtes.

**8.** Procédé selon l'une des revendications 2 à 7, dans lequel les étapes sont mises en oeuvre selon une fréquence donnée sur une période déterminée.

**9.** Procédé selon l'une des revendications 2 à 7, dans lequel un nombre d'itérations des étapes est déterminé dynamiquement en comparant des écarts-types obtenus entre une m-ième itération et des (m-1)-ième et (m-2)-ième itérations, avec m > 4, le nombre d'itérations étant suffisant lorsqu'une variation des écarts-types obtenus est inférieure à une valeur donnée.

**10.** Procédé selon la revendication 2 à 9, comprenant une étape (E15) de comparaison du vecteur de bits modèle et du vecteur de bits courant, mise en oeuvre lorsque l'écart-type calculé en phase d'apprentissage est égal à zéro, une alerte étant levée lorsque les vecteurs sont différents.

**11.** Dispositif de détection d'anomalies dans un trafic réseau, ledit trafic étant transmis par un serveur en réponse à des requêtes d'un dispositif client, le dispositif comprenant :

- des moyens de réception (123), adaptés pour recevoir une requête, ladite requête étant d'un type donné, et pour recevoir une réponse à la requête,
- des moyens de construction (124), adaptés pour construire un vecteur de bits courant ($V_N$), représentatif de la réponse,
- des moyens de calcul (125), adaptés pour calculer un indice de similarité représentatif d'une distance entre le vecteur de bits courant et un vecteur de bits modèle ($V_{mod}$) associé au type de la requête,
- des moyens de vérification (128), adaptés pour vérifier que l'indice de similarité n'appartient pas à un intervalle de conformité calculé pour le type de requête, une anomalie étant détectée lorsque l'indice de similarité n'appartient pas à l'intervalle de conformité.

**12.** Programme d'ordinateur destiné à être installé dans une mémoire d'un ordinateur, comprenant des instructions pour la mise en oeuvre des étapes du procédé de détection d'anomalies dans un trafic réseau selon l'une des revendications 1 à 10, lorsque le programme est exécuté par un processeur.

**13.** Support de données sur lequel est enregistré le programme selon la revendication 12.

**Patentansprüche**

**1.** Verfahren zum Erkennen von Anomalien in einem Netzwerkverkehr wobei der Verkehr von einem Server (10) als Antwort auf Anfragen von mindestens einer Client-Vorrichtung (11) übertragen wird, wobei das Verfahren aufweist:

- einen Schritt (E10) zum Empfangen einer Anfrage, wobei die Anfrage eine Anfrage gegebener Art ist,
- einen Schritt (E11) zum Empfangen einer Antwort auf die Anfrage,
- einen Schritt (E13) zum Konstruieren eines aktuellen Bitvektors ($V_N$), der die Antwort darstellt,
- einen Schritt (E17) zum Berechnen eines Ähnlichkeitsindexes, der einen Abstand zwischen dem aktuellen Bitvektor und einem Modellbitvektor ($V_{mod}$), der der Art der Anfrage zugeordnet ist, darstellt,
- einen Schritt zum Überprüfen (E18), das der Ähnlichkeitsindex ($IS_C$) zu einem Übereinstimmungsintervall (IC) gehört, das für diese Art der Anfrage berechnet wurde, wobei eine Anomalie erkannt wird, wenn der Ähnlichkeitsindex nicht zu dem Übereinstimmungsintervall gehört.

**2.** Verfahren zum Erkennen von Anomalien nach Anspruch 1, aufweisend eine Lernphase (P0), wobei die Lernphase aufweist:

- einen Schritt (E00) zum Empfangen einer ersten Anfrage, wobei die erste Anfrage eine Anfrage gegebener Art ist,
- einen Schritt (E01) zum Empfangen einer ersten Antwort auf die erste Anfrage,
- einen Schritt (E03) zum Konstruieren eines Modellbitvektors, der die erste Antwort darstellt,
- einen Schritt (E03', E03'') zum Aktualisieren des Modellvektors basierend auf einem folgenden Bitvektor, der basierend auf einer folgenden Antwort konstruiert wird, die nach einer folgenden Anfrage gegebener Art erhalten wurde,
- einen Schritt (E06', E06'''') zum Berechnen eines Ähnlichkeitsindexes zwischen dem aktualisierten Modellvektor und dem folgenden Bitvektor, wobei die Schritte zum Aktualisieren und zum Berechnen des Ähnlichkeitsindexes mindestens einmal wiederholt werden,
- einen Schritt (E07") zum Berechnen eines Durchschnitts der berechneten Ähnlichkeitsindizes und einer Standardabweichung dieser Indizes,
- einen Schritt (E09") zum Berechnen des Übereinstimmungsintervalls basierend auf dem Durchschnitt der Indizes und der Standardabweichung.

3. Verfahren zum Erkennen von Anomalien nach Anspruch 2, wobei das Übereinstimmungsintervall (IC) mithilfe des Mittelwerts $M_{IS}$ der berechneten Ähnlichkeitsindizes und der Standardabweichung $\sigma_{IS}$ dieser Indizes gemäß der folgenden Formel definiert ist:

$$IC = [M_{IS} - 3 * \sigma, M_{IS} + 3 * \sigma]$$

4. Erkennungsverfahren nach einem der vorhergehenden Ansprüche, wobei die Konstruktion eines Bitvektors basierend auf einer Antwort auf eine Anfrage die folgenden Schritte aufweist:

- Zerlegen der Antwort in Wörter, aus denen sie besteht,
- Berechnen einer Position Pj, $1 \leq j \leq n$, in dem Bitvektor, wobei die Position einem der Wörter zugeordnet wird, indem die folgenden Schritte durchgeführt werden:

- Umwandeln des Wortes in eine binäre Form,
- Erhalten der Position Pj in dem Vektor durch Anwendung von Modulo n einer Hashfunktion auf die erhaltene binäre Form, und
- Positionieren des Pj-ten Bits auf 1.

5. Erkennungsverfahren nach einem der Ansprüche 2 bis 4, ferner aufweisend einen Schritt zum Filtern, in dem ein Filterbitvektor, der eine Darstellung eines Satzes von nicht signifikanten Wörtern aufweist, von dem Modellvektor und von dem folgenden Bitvektor subtrahiert wird, bevor der Modellvektor basierend auf dem folgenden Bitvektor aktualisiert wird.

6. Verfahren nach Anspruch 4, wobei die Größe des Bitvektors eine Anzahl von Bytes im Bereich zwischen 4 Kbit und 400 Kbit ist.

7. Verfahren nach Anspruch 6, wobei eine Größenordnung der Größe des Bitvektors 5 % einer mittleren Größe von Antworten auf Anfragen ist.

8. Verfahren nach einem der Ansprüche 2 bis 7, wobei die Schritte gemäß einer gegebenen Häufigkeit über einen gegebenen Zeitraum durchgeführt werden.

9. Verfahren nach einem der Ansprüche 2 bis 7, wobei eine Anzahl von Wiederholungen der Schritte dynamisch bestimmt wird, indem Standardabweichungen verglichen werden, die zwischen einer m-ten Wiederholung und (m-1)-ten und (m-2)-ten Wiederholungen erhalten werden, wobei gilt m > 4, wobei die Anzahl der Wiederholungen ausreichend ist, wenn eine Variation der erhaltenen Standardabweichungen kleiner als ein gegebener Wert ist.

10. Verfahren nach Anspruch 2 bis 9, aufweisend einen Schritt (E15) zum Vergleichen des Modellbitvektors und des aktuellen Bitvektors, der durchgeführt wird, wenn die in der Lernphase berechnete Standardabweichung gleich null ist, wobei ein Alarm ausgelöst wird, wenn die Vektoren verschieden sind.

11. Vorrichtung zum Erkennen von Anomalien in einem Netzwerkverkehr, wobei der Verkehr von einem Server als Antwort auf Anfragen von mindestens einer Client-Vorrichtung übertragen wird, wobei die Vorrichtung aufweist:

- Empfangseinrichtungen (123), die eingerichtet sind, um eine Anfrage zu empfangen, wobei die Anfrage eine Anfrage einer gegebenen Art ist, und um eine Antwort auf die Anfrage zu empfangen,
- Konstruktionseinrichtungen (124), die eingerichtet sind, um einen aktuellen Bitvektor ($V_N$) zu konstruieren, der die Antwort darstellt,

- Berechnungseinrichtungen (125), die eingerichtet sind, um einen Ähnlichkeitsindex zu berechnen, der einen Abstand zwischen dem aktuellen Bitvektor und einem Modellbitvektor ($V_{mod}$), der der Art der Anfrage zugeordnet ist, darstellt,
- Überprüfungseinrichtungen (128), die eingerichtet sind, um zu überprüfen, dass der Ähnlichkeitsindex nicht zu einem Übereinstimmungsintervall gehört, das für die Art der Anfrage berechnet wurde, wobei eine Anomalie erkannt wird, wenn der Ähnlichkeitsindex nicht zu einem Übereinstimmungsintervall gehört.

12. Computerprogramm, das dazu bestimmt ist, in einem Speicher eines Computers installiert zu werden, aufweisend Befehle für die Durchführung der Schritte des Verfahrens zum Erkennen von Anomalien in einem Netzwerkverkehr nach einem der Ansprüche 1 bis 10, wenn das Programm von einem Prozessor ausgeführt wird.

13. Datenträger, auf dem das Programm nach Anspruch 12 aufgezeichnet ist.

**Claims**

1. Method for detecting anomalies in network traffic, said traffic being transmitted by a server (10) in response to requests from at least one client device (11), the method comprising:

   - a step (E10) for receiving a request, said request being of a given type,
   - a step (E11) for receiving a response to the request,
   - a step (E13) for constructing a current bit array ($V_N$), representative of the response,
   - a step (E17) for calculating a similarity index representative of a distance between the current bit array and a model bit array ($V_{mod}$) associated with the type of the request,
   - a step (E18) for verifying that the similarity index ($IS_c$) belongs to a compliance interval ($IC$) calculated for the type of request, an anomaly being detected when the similarity index does not belong to the compliance interval.

2. Method for detecting anomalies according to Claim 1, comprising a learning phase (P0), the learning phase comprising:

   - a step (E00) for receiving an initial request, the initial request being of the given type,
   - a step (E01) for receiving an initial response to the initial request,
   - a step (E03) for constructing a model bit array, representative of the initial response,
   - a step (E03', E03") for updating the model array based on a subsequent bit array, constructed based on a next response received following a next request of the given type,
   - a step (E06', E06") for calculating a similarity index between the updated model array and the following bit array, the steps for updating and calculating the similarity index being iterated at least once,
   - a step (E07") for calculating a mean of the calculated similarity indices and a standard deviation of these indices,
   - a step (E09") for calculating the compliance interval based on the mean of the indices and on the standard deviation.

3. Method for detecting anomalies according to Claim 2, in which the compliance interval (IC) is defined by means of the mean $M_{IS}$ of the calculated similarity indices and of the standard deviation $\sigma_{IS}$ of these indices, according to the following formula:

$$IC = [M_{IS} - 3 * \sigma, M_{IS} + 3 * \sigma]$$

4. Detection method according to one of the preceding claims, in which the construction of a bit array based on a response to a request comprises the following steps:

   - decomposition of the response into words composing it,
   - calculation of a position Pj, $1 \leq j \leq n$, within the bit array, said position being associated with one of the words, by implementing the following steps:

     - conversion of said word into a binary form,
     - obtaining the position Pj within the array by application modulo n of a hash function to said binary form obtained, and

- positioning the Pj-th bit at 1.

5. Detection method according to one of Claims 2 to 4, also comprising a filtering step during which a filtering bit array comprising a representation of a set of non-significant words is subtracted from the model array and from the following bit array prior to the updating of the model array based on the following bit array.

6. Method according to Claim 4, in which the size of the bit array is a number of bytes in the range between 4Kbits and 400Kbits.

7. Method according to Claim 6, in which an order of magnitude of the size of the bit array is 5% of a mean size of responses to requests.

8. Method according to one of Claims 2 to 7, in which the steps are implemented according to a given frequency over a given period.

9. Method according to one of Claims 2 to 7, in which a number of iterations of the steps is determined dynamically by comparing standard deviations obtained between an m-th iteration and the (m-1)-th and (m-2)-th iterations, with m > 4, the number of iterations being sufficient when a variation of the standard deviations obtained is less than a given value.

10. Method according to Claim 2 to 9, comprising a step (E15) for comparison of the model bit array and the current bit array, implemented when the standard deviation calculated in the learning phase is equal to zero, an alarm being raised when the arrays are different.

11. Device for detection of anomalies in network traffic, said traffic being transmitted by a server in response to requests from a client device, the device comprising:

- receiving means (123), intended to receive a request, said request being of a given type, and to receive a response to the request,
- construction means (124), intended to construct a current bit array ($V_N$) representative of the response,
- calculation means (125), intended to calculate a similarity index representative of a distance between the current bit array and a model bit array ($V_{mod}$) associated with the type of the request,
- verification means (128), intended to verify that the similarity index does not belong to a compliance interval calculated for the type of request, an anomaly being detected when the similarity index does not belong to the compliance interval.

12. Computer program intended to be installed in a memory of a computer, comprising instructions for the implementation of the steps of the method for detecting anomalies in network traffic according to one of Claims 1 to 10, when the program is executed by a processor.

13. Data medium on which the program according to Claim 12 is recorded.

Figure 1

CL  11
DET  12
10  S

E10 — Rec_requ

E11 — Rec_resp

E12 — Ana_resp

E13 — Mod_Vbits

E14 — Static ($\sigma_{is} = 0$)?
ok / nok

E17 — Calc_IS$_c$ ($V_N$, $V_{mod}$)

E15 — $V_N = V_{mod}$?
nok / ok

E18 — $IS_c \in IC$
nok / ok

E16 — Alert

P1

Figure 2

Figure 3

**EP 3 053 320 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2006179040 A